# EUROPEAN PATENT SPECIFICATION

(11) **EP 4 399 996 B1**
(45) Date of publication and mention of the grant of the patent: **06.08.2025**
(21) Application number: 23151425.8
(22) Date of filing: 12.01.2023
(51) Int. Cl.: A46B 15/00, A61C 17/22, A61C 17/34

(54) **PERSONAL CARE DEVICE COMPRISING A FORCE SENSOR**
KÖRPERPFLEGEVORRICHTUNG MIT DRUCKSENSOR
DISPOSITIF DE SOINS PERSONNELS COMPRENANT UN CAPTEUR DE FORCE

(43) Date of publication of application: 17.07.2024
(73) Proprietor: Braun GmbH, 61476 Kronberg im Taunus (DE)
(72) Inventor: SENTÜRK ANDERSSON, Aycan, 61476 Kronberg (DE); KÜCHLER, KervinHeinrich, 61476 Kronberg (DE); CORTECCHIA, Elisa, 61476 Kronberg (DE); CIGERDELEN, Levent, 61476 Kronberg (DE); CLAIRE-ZIMMET, Karen Lynn, 61476 Kronberg (DE); PÖTZSCH, Moritz, 61476 Kronberg (DE); LIEBE, Tina, 61476 Kronberg (DE)
(74) Representative: P&G Patent Germany

(56) References cited:
- WO-A1-2021/262528
- JP-A- H03 173 558
- US-B2- 11 361 672

## Description

### FIELD OF THE INVENTION

The present disclosure is concerned with a personal care device comprising a force sensor and a control unit to control a motion of a personal care head of the personal care device in dependence on the force value determined from force sensor data.

### BACKGROUND OF THE INVENTION

Document WO 2013/14630 A1 describes a personal care device that has an electrically powered driving unit for driving a working implement of the personal care device at a desired speed and/or amplitude and/or frequency, and a control unit for controlling the driving unit in response to load onto the working implement to change speed and/or amplitude and/or frequency of the working implement upon a change in load applied thereto. The control unit includes a detector for detecting changes of an operating parameter of the driving unit, which operating value is responsive to load onto the working implement, and a powering unit for varying the electrical powering of the driving unit in response to a detected value of the operating parameter such that speed and/or amplitude and/or frequency of the working implement is changed from an idling value to an increased operation value.

A result of the described concept is a less intensely moving working implement when the personal care device is switched on and the motion is only increased to a nominal value once a load above a threshold is detected. In case of a toothbrush this may lead to less toothpaste being splattered around when the toothbrush is switched on but is not already positioned in the oral cavity.

Document JPH 03-173558 A describes a pressure detecting means for detecting the pressure applied to a brush body. The pressure detecting means is provided in a ring channel formed on the lower end surface of a handle part of the brush body, a speed controlling circuit is connected to a power source through a power source switch, and the pressure detecting means, a speed detecting means for detecting the rotating speed of a motor, and a changing switch are connected thereto. When the power source switch is closed, a motor starts to rotate, and the rotating motion of this motor is converted into reciprocal movement by a motion converting mechanism and transmitted to a driving shaft. At that time, the rotating speed of the motor is controlled by the speed controlling circuit. The speed controlling circuit selects the corresponding relation between the pressure applied to the brush body by the set of the changing switch and the rotating speed of the motor and controls the rotating speed of the motor on the basis of this corresponding relation. Relevant prior arts are also disclosed by WO 2021/262528 A1, and US 11 361 672 B2.

There remains an object to provide a personal care device that is suitable to provide guidance to a user to use the personal care device with a predetermined optimum treatment parameter, specifically wherein the treatment parameter is a force with which a personal care head of the personal care device is pushed against a treatment surface.

### SUMMARY OF THE INVENTION

In accordance with at least one aspect a personal care device is provided in accordance with claim 1. Further embodiments are described by the dependent claims.

In accordance with at least one aspect a personal care system is provided that comprises a personal care device in accordance with the previous paragraph or as described herein and a separate feedback device structured and/or arranged for additionally or alternatively providing at least one of a visual, audible or haptic feedback relating to the determined force value and/or relating to the force value range in which the determined force value lies and/or relating to a difference between the determined force value and an optimal force value and/or relating to a match between the determined force value with the optimal force value, optionally wherein the personal care device and the separate feedback device are structured and/or arranged for at least one-directional wireless communication from the personal care device to the separate feedback device, preferably wherein the personal care device and the separate feedback device are structured and/or arranged for bidirectional wireless communication.

### BRIEF DESCRIPTION OF THE DRAWINGS

The present disclosure will be further elucidated by a detailed description of example embodiments and with reference to figures. In the figures
- Fig. 1: is a personal care device realized as an electric toothbrush;
- Fig. 2A: is a first plot of the functional behavior of a motion parameter in dependence on a force value;
- Fig. 2B: is a second plot of the functional behavior of a motion parameter in dependence on a force value; and
- Fig. 3: is a spider web chart of sensorial characteristics of motion modes of a toothbrush head.

### DETAILED DESCRIPTION OF THE INVENTION

In the context of the present description "personal care" shall mean the nurture (or care) of the skin and of its adnexa (i.e., hairs and nails) and of the teeth and the oral cavity (including the tongue, the gums etc.), where the aim is on the one hand the prevention of illnesses and the maintenance and strengthening of health and on the other hand the cosmetic treatment and improvement of the appearance of the skin and its adnexa. It shall include the maintenance and strengthening of wellbeing. This includes skin care, hair care, and oral care as well as nail care. This further includes grooming activities such as beard care, shaving, and depilation. A "personal care device" thus means any device for performing such nurturing or grooming activity, e.g. (cosmetic) skin treatment devices such as skin massage devices or skin brushes; wet razors; electric shavers or trimmers; electric epilators; and oral care devices such as manual or electric toothbrushes, (electric) flossers, (electric) irrigators, (electric) tongue cleaners, or (electric) gum massagers. Terms in brackets mean that this is an optional feature. This shall not exclude that the proposed personal care device may have a more pronounced benefit in one or several of these nurturing or device areas than in one or several other of these areas. In the present description, an electric toothbrush was chosen to represent a personal care device. To the extent in which the details are not specific for an electric toothbrush, the proposed technology and concepts can be used in any other personal care device.

In the present disclosure, a personal care device is proposed that comprises a force sensor that generates force sensor data from which a force value can be determined relating to the force with which a personal care head of the personal care device is pushed against a treatment surface along at least a first force direction, e.g., the force with which a brush head of a toothbrush is pushed against a tooth surface in a direction normal to the personal care head. The force sensor may be calibrated so that an absolute force value can be computed, e.g., an absolute force value in Newton (N). Alternatively or additionally, a relative force value can be computed that only provides information about the changes of the force value instead of allowing to compute an absolute force value. A control unit coupled with the force sensor is structured and/or arranged to determine the force value based on the force sensor data. At least a portion of the control unit may be integral with the force sensor so that a unit comprising force sensor and the portion of the control unit output calibrated force sensor data. The control unit is structured and/or arranged to control a drive unit that drives at least a portion of the personal care head into motion in a manner so that at least one motion parameter of the motion with which the at least portion of the brush head is driven is changed in dependence on the determined force value, specifically wherein the motion parameter is gradually increased within a first force value range from a first motion parameter start value to a first motion parameter end value when the force value is increased from a first lower force value to a first upper force value. The at least one motion parameter may be one from the list comprising an amplitude, a velocity or speed or rate, and a frequency. In the present disclosure, several force value ranges are mentioned. It shall be understood that these force value ranges are characterized in the same way, namely by having a lower force value and an upper force value, where a motion parameter start value is assigned to the lower force value and a motion parameter end value is assigned to the upper force value. The motion parameter may be increased between the lower force value and the upper force value, in particular monotonously increased, or decreased, in particular monotonously decreased, or kept constant. A monotonous increase or decrease may in particular be a linear increase or decrease.

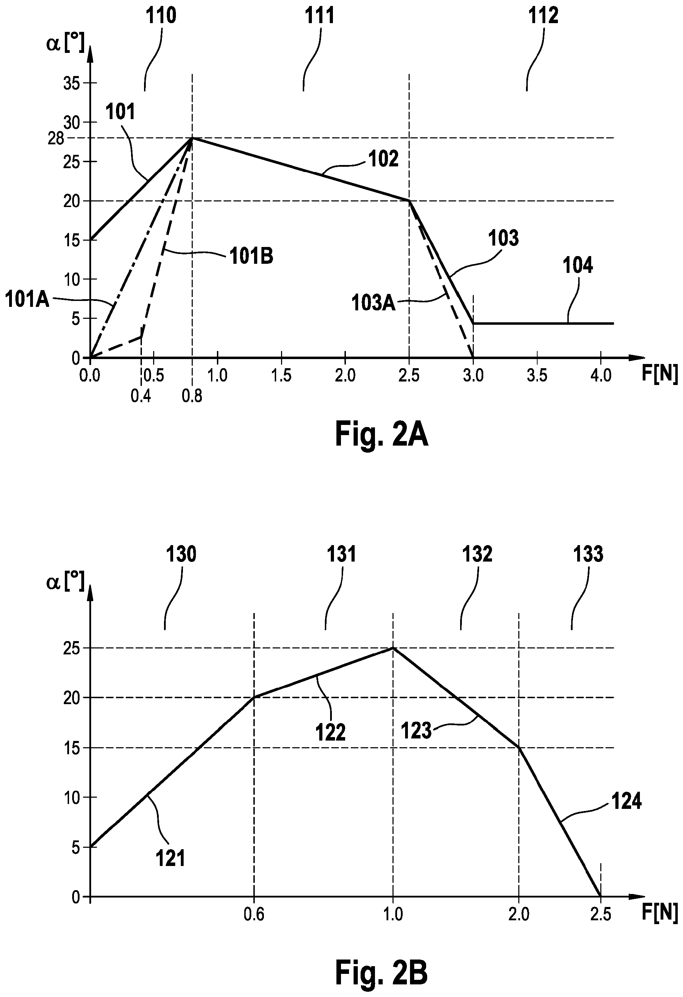

In contrast to the previously mentioned document WO 2013/14630 A1, where the underlying idea may be summarized as switching from an idling value of a motion parameter to an operating or nominal value of the motion parameter in case the load of the motor is found to be above a first load threshold, the intention of the present proposal is to provide a motion parameter that is gradually changing, specifically gradually increasing from a first motion parameter start value to a first motion parameter end value within a first force value range that starts at a first lower force value and ends at a first upper force value. Here it shall be understood that the first motion parameter start value relates to the first lower force value and the first motion parameter end value relates to the first upper force value. E.g., the first lower force range value may be 0.0 N in absolute terms and the first upper force value may be 0.8 N. The first motion parameter start value may then be 0.0 degrees deflection angle, which is understood to be an amplitude value, and the first motion parameter end value may then be 28 degrees deflection angle. Further examples of these values will be discussed below, specifically, the first motion parameter end value may be 20 degrees or 33 degrees or any value in between these values or an even smaller or larger value. This gradual increase allows to communicate to the user the recommended force value range and/or an optimal force value by noticeably decreasing the motion parameter when the determined force value drops below a sensible lower force value. Optionally, in a more elaborate embodiment described below, when the applied force value increases beyond a sensible higher force value, the motion parameter may be gradually decreased. The optimal force value and the optional lower and/or higher force values may be predetermined. To provide a good user noticeable gradual motion parameter change, the first force value range and the respective first motion parameter value range may be chosen to have a minimum width or height, respectively. By way of example, the minimum width of the first or any subsequent force value range may be 0.3 N or 0.4 N or 0.5 N or 0.6 N or 0.7 N or 0.8 N or 0.9 N or 1.0 N etc. Reference is also made to Figs. 2A and 2B. The height of the first or any subsequent motion parameter value range may represent at least a 10% change with respect to the overall peak value or at least a 20% change or at least a 25% change or at least a 30% change or at least a 35% change or at least a 40% change or at least a 45% change or at least a 50% change. Again, reference is made to Figs. 2A and 2B. This shall not exclude that the motion parameter value is kept constant in a certain force value range that is considered to represent the recommended or optimal force values and that the motion parameter value is decreased when the force value drops below the respective lower force value of this optimal force value range or exceeds the higher force value of the optimal force value range.

The control unit may be structured and/or arranged to gradually increase or decrease the motion parameter value in at least one further force value range that is subsequent to or optionally adjooining the first force value range. Here, 'subsequent' shall not exclude that the two different force value ranges have a force gap in between in which the motion parameter is kept constant as mentioned above. E.g., the control unit may be structured and/or arranged to increase or decrease, respectively, the motion parameter value from a second motion parameter start value that may coincide with the first motion parameter end value to a second motion parameter end value in a second force value range subsequent to the first force value range, which second force value range starts at a second lower force value that may coincide with the first upper force value and ends at a second upper force value or where there is a force gap between the first upper force value and the second lower force value, e.g., where the first upper force value is 0.8 N and the second lower force value is 1.5 N. There may be further force value ranges being subsequent to the second force value range in the same manner as the second force value range is subsequent to or adjoining the first force value range. It is the intention that the motion parameter value has an overall, i.e., global peak value that may be achieved at the range end the first or second force value range, which shall not exclude that the overall peak value of the motion parameter is only achieved at the end of a third or fourth force value range. While for reasons of simplification of the control algorithm employed by the control unit, the increase or decrease of the motion parameter value may happen along linear curve segments in each of the plurality of force value ranges, it shall not be excluded that a monotonous increase or decrease, respectively, is achieved by non-linear curve segments in each of the plurality of force value ranges.

The personal care device may comprise a feedback unit for providing a visual, audible or haptic feedback relating to the determined force value and/or relating to the force value range in which the determined force value lies and/or relating to a difference between the determined force value and an optimal force value and/or relating to a match between the determined force value with the optimal force value. A match may be concluded in case the determined force value is within a force value range around the overall peak force value. The force value range may be, e.g., ±1% of the overall peak force value or ±2% or ±3% or ±5% or ±7.5% or ±10% etc. This may support the user in identifying whether or not the currently applied force value is within a recommended force value range or outside of the recommended force value range. While the herein described change of the motion parameter in dependance on the determined force value may already be understood as haptic feedback, it shall here be meant that the haptic feedback is haptic feedback different from the change of the motion parameter, e.g., is a vibration of a handle of the personal care device that communicates, e.g., a too excessive applied force or a too low applied force. The feedback signals to communicate different content, e.g., too low applied force or too high applied force may be different feedback signals.

In the personal care device as discussed herein, the feedback unit may be structured and/or arranged for providing a user recognizable start feedback signal indicating that the determined force value essentially matches with the optimal force value, and for providing a current feedback signal deviating from the start feedback signal the stronger the larger the difference between the optimal force value and the determined force value is. The feedback signal may be a visual, audible or haptic signal. By providing a signal that deviates from the start signal the stronger the larger the distance of the determined force value is from the optimum force value, the user has a recognizable signal indicating that indicates that the optimal force value is currently not applied. By changing the applied force, the user gets immediate feedback whether the applied force moves farther away or closer towards the optimum force value.

In the personal care device as discussed herein, the feedback unit may be structured and/or arranged to provide the start feedback signal comprising a start degree of user-noticeable orderliness and to gradually decrease the degree of user-noticeable orderliness of the current feedback signal the more, the larger the difference is between the optimal force value and the determined force value. In at least some examples, the start feedback signal is a visual signal that comprises two identical graphical objects, e.g., rings, that overlap so that they appear as one ring and the larger the distance between the determined force value and the optimal force value becomes, the more the rings are moved away from the overlapping state so that the orderliness of the start signal reduces more and more with increasing distance between the force values. In other examples, the visual start signal is a single ring that is shown at rest and the larger the distance between the determined force value and the optimal force value becomes, the more the visually presented ring is shown as vibrating so that it loses its orderliness. Other examples are provided below.

In the personal care device as discussed herein, the feedback may be visual feedback, and the control unit is then structured and/or arranged to provide a visual feedback signal in accordance with one of the following implementations to decrease the orderliness of the feedback:
- the start feedback signal is a graphical symbol or an image, and the current feedback signal is the graphical symbol or image that is dissolved the more, the larger the difference is between the optimal force value and the determined force value; or
- the start feedback signal is a matching overlay of two identical graphical symbols or images, and the matching graphical symbols or images are moved away from each other the more, the larger the difference is between the force value at the optimal force value and the currently applied force value.

In the personal care device as discussed herein, the feedback may be audible feedback, and the control unit is then structured and/or arranged to provide an audible feedback signal. The audible start signal may be a tone having a single frequency and the current signal may be the start signal with further tones of different frequencies blended with the start signal. In another example, the start signal comprises a sound having two frequencies, where one frequency is a harmonic of the other frequency and the current signal is a sound where at least one of the frequencies deviates the stronger from being a harmonic with the other frequency, the larger the difference between the applied force value and the optimal force value becomes.

In the personal care device as discussed herein, the feedback may be haptic feedback, and the control unit is then structured and/or arranged to provide a haptic feedback signal. The start signal may be no vibration of a handle of the personal care device and the current signal may then be a vibration of the handle that becomes the more intense, the larger the distance between the determined force value and the optimum force value is. In another example, the vibration comprises two frequencies where one is a harmonic of the other and at least one of the frequencies is changed the more, the larger the difference is between the determined force value and the optimal force value.

Based on the provided examples for start signals and respective current signals, the skilled reader will be able to understand the underlying concept and will thus be able to come up with further embodiments that follow the gist of the provided examples.

The personal care device as discussed herein may comprise at least one sensor structured and/or arranged to create sensor data indicative of a position or location of the personal care device relative to the treatment surface, preferably wherein the sensor is at least one from a list comprising an accelerometer, a gyroscope, a barometer, a magnetometer and a camera. This does not necessarily mean that the mentioned sensors need to provide direct access to a position, but that the position may be indirectly determined based on the sensor data and a model that maps the sensor data with the position. E.g., the sensor data may be inputted into a classification algorithm that classifies a set of sensor data, specifically sensor data acquired at a plurality of subsequent time instants, with respect to various positions or locations such as the lower left molars or the buccal surface of the first upper right molar etc. Such a technology concept and details of embodiments are described, e.g., in document EP 3 528 172 A2, which is hereby expressly mentioned.

In the personal care device as discussed herein, the control unit may be structured and/or arranged to provide compliance feedback indicative of a level of compliance with the predetermined optimal force value or optimal force value range with which a personal care head of the personal care device should be pushed against the treatment surface, which compliance feedback may be provided during an ongoing personal care session and/or after a completed personal care session and/or for at least one previous personal care session, optionally wherein the compliance feedback is provided for at least two different positions or locations on the treatment surface.

In the personal care device as discussed herein, the force sensor may be responsive to a deflection of a first portion of the personal care device with respect to a second portion of the personal care device in dependence on the currently applied force with which the personal care head is pushed against the treatment surface, optionally wherein the force sensor comprises a Hall sensor and a permanent magnet that are each disposed at a different one of the first portion and the second portion of the personal care device. This shall not exclude other force sensor designs such as a force sensor comprising two oppositely arranged electrodes or at least one strain gauge.

The personal care device as discussed herein may comprise at least one sensor structured and/or arranged to create sensor data indicative of a motion of the personal care device, wherein the control unit is structured and/or arranged for switching on the drive unit of the personal care device in case the sensor data indicative of motion of the personal care device indicate a lifting of the personal care device from a rest position. The respective sensor may be at least one from the list comprising an accelerometer, a gyroscope, a barometer, a magnetometer and a camera. The sensor for sensing motion may be the same detector as is used for determining a position.

The present disclosure is also concerned with a personal care system comprising a personal care device as discussed herein and a separate feedback device structured and/or arranged for additionally or alternatively providing at least one of a visual, audible or haptic feedback relating to the determined force value and/or relating to the force value range in which the determined force value lies and/or relating to a difference between the determined force value and the optimal force value and/or relating to a match between the determined force value with the optimal force value, optionally wherein the personal care device and the separate feedback device are structured and/or arranged for at least one-directional wireless communication from the personal care device to the separate feedback device, preferably wherein the personal care device and the separate feedback device are structured and/or arranged for bidirectional wireless communication. The separate feedback device may be a mobile phone, a tablet computer, a smart watch, a computer, a proprietary device such as a proprietary display device etc. It is contemplated that in case of additional feedback, the personal care device may provide at least one type of feedback, e.g., audible feedback or haptic feedback, and the separate feedback device may then provide at least one other type of feedback, e.g., visual feedback.

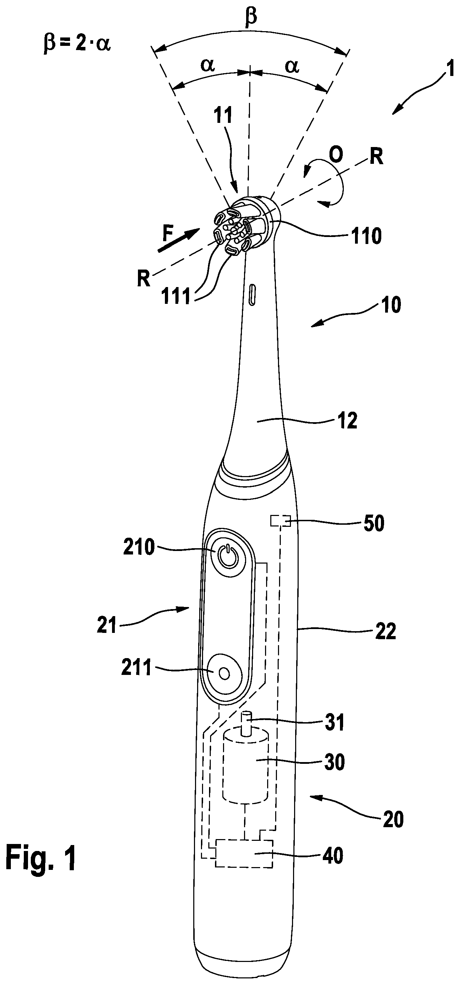

Fig. 1 is a schematic depiction of an example personal care device 1 realized as an electric toothbrush. The personal care device 1 here comprises a personal care head 10 realized as a replaceable brush head and a handle 20 to which the replaceable personal care head 10 is detachably attached. Generally, the personal care head 10 does not need to be replaceable. The personal care head 10 comprises a head section 11 mounted at a housing 12 of the personal care head 10, which head section 11 may be driven into an oscillatory rotating motion as is indicated by double arrow O. The oscillatory rotating motion may be characterized by a deflection angle α by which the head section 11 is rotated in clockwise or counter-clockwise direction out of the rest position or center position until it is rotated back into counter-clockwise or clockwise direction, where it is also deflected by an angle α as measured from the rest position until it is rotated back towards the rest position in clockwise or counter-clockwise direction and further again in the same direction by an angle α as measured from the rest position. The total angular motion of the head section 11 is then β = 2·α in each half cycle of the described periodic motion. This should not be understood as limiting. Rotating motion, wiping motion, linearly reciprocating motion etc. is also considered. The head section 11 may comprise a carrier 110 on which in the shown embodiment treatment elements 111 that are here realized as bristle tufts each comprising a plurality of filaments are mounted. The handle 20 may comprise a user interface 21 that may comprise a first user-operable input element 210 such as an on/off button or on/off switch and, optionally, at least one second user-operable input element 211 such as a mode button or mode switch by which the user can select one of a plurality of available modes, e.g., driving modes with which the head section 11 can be driven into different motions. Generally, the personal care device 1 has at least one driving mode, which is the mode described in the following with reference to Figs. 2A and 2B and which is called herein the "adaptive mode". The personal care device 1 may comprise further modes, such as a "Clean" mode or a "Sensitive" mode or the like as are generally known from, e.g., electric toothbrushes such as the Oral-B iO 9. Such modes may differ from each other in at least one of a frequency, velocity, or amplitude of the periodic motion and/or the respective value(s) may change over time in a predetermined manner so that the different modes have a different temporal behavior.

The personal care device 1 further comprises a drive 30 that is mechanically coupled with the head section 11 and electronically coupled with a controller 40 that controls at least one motion parameter from the list comprising an amplitude, frequency, and/or velocity of a drive shaft 31 of the drive 30. While the drive 30 may comprise a motor, the drive shaft 31 does not need to be a motor shaft, but a gear may be arranged between the motor shaft and the drive shaft 31, e.g., to convert a rotational motion of the motor shaft into a reciprocating motion of the drive shaft 31. The drive 30 is mechanically coupled with the head section 11 so that the head section 11 in the shown embodiment oscillatory rotates around a rotation axis R that extends through a geometric center of the carrier 110. The controller 40 is also electronically coupled with a force sensor 50, which is structured and/or arranged to create sensor data indicative of a value of a force F with which the head section 11 is pushed against a treatment surface, e.g., a tooth surface, in at least a first force direction, which may here be identical with a direction towards the head section 11 parallel to the rotation axis R.

Figs. 2A and 2B are depictions of example realizations of an adaptive mode in which a motion parameter - here the deflection angle α - is changed in dependence on the force F measured by the force sensor, where the depicted graphs visualize the dependency of the deflection angle α in degrees (°) on the force value F given in Newton (N).

In the examples shown in Fig. 2A, the deflection angle α is depicted over a force value range of between 0.0 N and 4.0 N, where it is understood that this is just one example range chosen for electric toothbrushes. The force value range is divided into three successively adjoining force value sub-ranges 110, 111 and 112. The first force value sub-range 110 extends between 0.0 N and 0.8 N and is the force value sub-range that may be associated with a too low applied force value. The second force value sub-range 111 extends between 0.8 N and 2.5 N and may be associated with a preferred or tolerable applied force value. And the third force value sub-range 112 extends between 2.5 N and 4.0 N and may be associated with a too high applied force value. Of course, any value beyond 4.0 N would also be considered as a too high applied force value. The different force value sub-ranges 110, 111, 112 may be indicated to the user, e.g., by different visual indications such as colors or icons, potentially using different visual indicators.

In accordance with one aspect, the motion parameter that is here the deflection angle α is gradually and preferably monotonously increased from a first motion parameter start value of here 15 degrees at a first lower force value of 0.0 N to a first motion parameter end value of here 28 degrees at a first upper force value of 0.8 N in the first force value sub-range 110. To the extent possible, the force value F may be determined as a continuous value or a quasi-continuous value and the motion parameter, here the deflection angle α, may then be determined in an essentially step-free manner, e.g., by means of a continuous function, preferably a monotonously increasing function or by means of a look-up table having enough entries to generate a step-free feeling for the user or to interpolate between the tabulated values. Line 101 is providing one example function for setting the deflection angle α in dependence on the force value F in the first force sub-range. Line 101 indicates that the head section is driven into a motion having a deflection angle α of 15 degrees being the first motion parameter start value when the personal care device is switched on and no force is applied or when the user reduces the force during brushing to 0.0 N, e.g., when the user is moving the toothbrush from one spot of the dentition to another spot. In this example, the deflection angle α is linearly increased up to 28 degrees being the first motion parameter end value when the force value reaches the first upper force value of 0.8 N. As one possible alternative, line 101A provides an example where the deflection angle is 0 degrees when no force is applied and is then linearly increased to a deflection angle of 28 degrees when a force value of 0.8 N is reached. As another possible alternative, line 101B indicates that the deflection angle α is slowly increased between 0.0 N and 0.4 N, 0.4 N being a first intermediate force value in the first force sub-range 110, and then is more strongly increased from 0.4 N to 0.8 N, which still is a monotonously increasing function that comprises two different linear slopes. This allows to put emphasis on the force values above 0.4 N so that the user understand that above this force value threshold, the user is nearing the recommended force value range. Line 102 indicates that the deflection angle α is linearly decreased from 28 degrees being the second motion parameter start value at 0.8 N, being the second lower force value of the second force sub-range 111, to 20 degrees being the second motion parameter end value at a force value of 2.5 N, being the second upper force value. This is a user-noticeable decrease by which it is communicated to the user that it is recommended to brush at a lower applied force value rather than a higher applied force value even though the applied force value still lies in the tolerable force value sub-range. In the third force value sub-range that here starts at 2.5 N being the third lower force value, line 103 indicates that the deflection angle α is strongly decreased between 2.5 N and 3.0 N being the third upper force value to communicate to the user that the preferred or tolerable force value sub-range was overshot. Above a force value of 3.0 N, as is indicated by line 104, the deflection angle α will in this example be kept on a constant low value. The latter may be sensible to communicate to the user that the brush has not completely stopped working, as a reduction to a deflection angle of zero may irritate the user but reference is made to Fig. 2B. Line 103A shows an alternative in which the motion parameter is linearly decreased to zero between 2.5 N and 3.0 N.

As was discussed above, there may be force range gaps, e.g., between the first force value range 110 and the second force value range 111, e.g., the first force value range may end at a first upper force value of 0.8 N as is shown and the second lower force value may be 1.5 N. The motion parameter may then be kept constant in the force gap, e.g., may be kept constant at 28 degrees.

In the example shown in Fig. 2B, the deflection angle α is shown over a force value range of between 0.0 N and 2.5 N, where it is understood that this is again just one example range chosen for electric toothbrushes. The force value range is divided into four force value sub-ranges 130, 131, 132 and 133. The first force value sub-range 130 extends between 0.0 N and 0.6 N and is the force value sub-range that may be associated with a too low applied force value. The second force value sub-range 131 extends between 0.6 N and 1.0 N and may be associated with a lower preferred or tolerable applied force value. The third force value sub-range 132 extends between 1.0 N and 2.0 N and may be associated with an upper preferred or still tolerable applied force value. The fourth force value sub-range extends between 2.0 N and 2.5 N and may be associated with a too high applied force value. Of course, any value beyond 2.5 N would also be considered as a too high applied force value. The different force value sub-ranges may be indicated to the user, e.g., by different visual indications or indicators.

In this example, line 121 indicates that the deflection angle α is in the first force value sub-range 130 increased from 5 degrees at 0.0 N to 20 degrees at 0.6 N, that the deflection angle α is further increased in the second force value sub-range 131 from 20 degrees at 0.6 N to 25 degrees at 1.0 N, is then decreased in the third force sub-range 132 from 25 degrees at 1.0 N to 15 degrees at 2.0 N and is further strongly decreased in the fourth force value sub-range 133 from 15 degrees at 2.0 N to 0 degrees at 2.5 N. While the user may be irritated by a stop of the motor at 2.5 N, this is also a strong and recognizable signal to the user that a sensible force value was overshot.

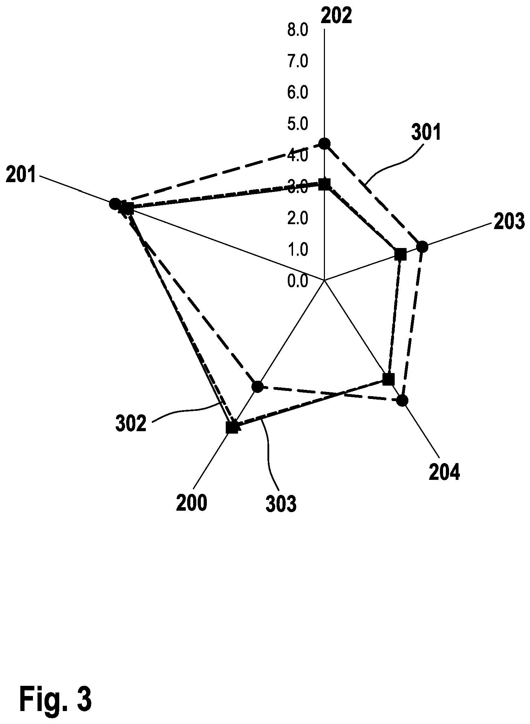

Fig. 3 shows a spider web chart on which 5 sensory characteristics 200 to 204 of brushing modes of an Oral-B iO electric toothbrush as rated by an expert panel are indicated for three brushing modes. Two modes, namely the Daily Clean mode - indicated by line 301 - and the Sensitive mode - indicated by line 302 - are existing modes of the Oral-B iO electric toothbrush and the herein proposed adaptive mode is indicated by line 303. The adaptive mode described herein, specifically realized in alignment with the example shown in Fig. 2A, and the two existing modes were rated in comparison by the experts.

The oscillation angle of the Daily Clean and Sensitive modes is 28 degrees and 20 degrees, respectively. In further existing brushing modes, the oscillation angle is 33 degrees or 15 degrees. In the existing modes, these oscillation angles are kept constant, i.e., are kept independent from the force value. The force-dependent oscillation angle of the adaptive mode in the assessed embodiment is shown in Fig. 2A in accordance with lines 101, 102, 103 and 104, where the oscillation angle is specifically increased first from 15 degrees at 0.0 N to 18 degrees at 0.8 N and then decreased from 28 degrees at 0.8 N to 20 degrees at 2.5 N. Instead of these values other values may be chosen instead, e.g., 5 degrees at 0.0 N, 33 degrees at 0.7 N - being kept constant up to 1.2 N - and then down from 33 degrees at 1.2 N to 23 degrees at 2.6 N. The user interface may allow a user to freely set the discussed values or to modify those within predetermined ranges.

The sensory characteristics that were rated by the members of the expert panel are as follows.

| | |
|---|---|
| Gentleness | is indicated on axis 200; |
| Polishing effect | is indicated on axis 201; |
| Gum irritation | is indicated on axis 202; |
| Vibration in Hand-in-mouth | is indicated on axis 203; and |
| Sound by brushing intensity | is indicated on axis 204. |

It can be seen that the members of the expert panel have rated the characteristics of the assessed adaptive mode to be almost identical with the existing Sensitive mode. In addition, the average plaque removal value was determined for the Daily Clean mode, the Sensitive mode and three different models for the herein described adaptive mode with varying oscillation angle using a brushing robot. The plaque removal values for the smart adaptive modes were determined based on a plaque removal prediction formula based on robot measurements for different oscillation angles at different force values. While the plaque removal value of the existing Sensitive mode is, in absolute terms, i.e., on a 0% to 100% scale, about 5 to 6 percent below the plaque removal value achieved by the existing Daily Clean mode, an adaptive mode can be chosen having a plaque removal value that is only about 1 to 2 percent below the Daily Clean mode and having the sensory characteristics as discussed in connection with Fig. 3 above. Seen together this means that the adaptive mode combines the characteristics of the Sensitive mode, namely a user-recognizable gentleness and a polishing effect with low gum irritation and low annoyance by vibration and sound, with a plaque removal result considerably better than the existing Sensitive mode. This indicates that the herein proposed adaptive mode with a force-dependent motion parameter, e.g., the oscillation angle, provides an objective improvement in comparison with the existing Sensitive mode with respect to the plaque removal efficiency without sacrificing on the side of the sensory characteristics. This is based on the insight that a user feels somewhat uncomfortable on an individual level when a relatively high oscillation angle is used at high force, e.g., 28 degrees as is the constant value for the Daily Clean mode at 2.4 N. It thus leads to an improvement in, e.g., the subjectively felt gentleness if the oscillation angle is changed from a relatively high oscillation angle at lower force value to a relatively low oscillation angle at higher force values - see, e.g., line segment 102 in Fig. 2A. As such sensory characteristics are subjective, it may be sensible to consider having more than one adaptive mode so that the user can choose the mode best suiting her or him or to consider providing a user-controlled setting of at least one parameter of the adaptive mode, e.g., via a user interface.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A personal care device (1), preferably an electric toothbrush, comprising
a personal care head (10), preferably a toothbrush head;
a force sensor (50) structured and/or arranged for acquiring force sensor data indicative of a force value (F) with which the personal care head (10) is pushed against a treatment surface along at least a first force direction;
a processor (40) structured and/or arranged for determining the force value from the force sensor data;
a drive unit (30) structured and/or arranged for driving the personal care head (10) into a motion that is **characterized by** at least one motion parameter being one from the list comprising a speed, an amplitude and a frequency, the motion preferably being an oscillatory rotational motion; and
a control unit (40) structured and/or arranged for controlling the motion parameter of the personal care head (10) in dependence on the determined force value (F) such that in a first force value range (110; 130, 131) extending from a first lower force value to a first upper force value the motion parameter is gradually increased from a first motion parameter start value to a first motion parameter end value when the force value (F) increases from the first lower force value to the first upper force value and for controlling the motion parameter such that in a second force value range (111; 132) extending from a second lower force value to a second upper force value and being subsequent to and optionally adjoining the first force value range (110; 130, 131) the motion parameter is gradually decreased from a second motion parameter start value that is identical with the first motion parameter end value to a second motion parameter end value when the force value increases from a second lower force value being identical to the first upper force value to a second upper force value so that the first motion parameter end value represents an overall peak value of the motion parameter.

2. The personal care device in accordance with claim 1, wherein the control unit (40) is structured and/or arranged for controlling the motion parameter such that in a third force value range (112) extending from a third lower force value to a third upper force value and being subsequent to and optionally adjoining the second force value range (111; 132), the motion parameter is gradually decreased from a third motion parameter start value that is identical with the second motion parameter end value to a third motion parameter end value when the force value increases from a third lower force value being identical to the second upper force value to a third upper force value, optionally wherein the control unit (40) is structured and/or arranged for controlling the motion parameter such that in a fourth force value range (133) extending from a fourth lower force value to a fourth upper force value and being subsequent to the third force value range the motion parameter is gradually decreased from a fourth motion parameter start value that is identical with the third motion parameter end value to a fourth motion parameter end value when the force value increases from a fourth lower force value being identical to the third upper force value to a fourth upper force value.

3. The personal care device in accordance with claim 1 or claim 2, comprising a feedback unit for providing a visual, audible or haptic feedback relating to the determined force value and/or relating to the force value range in which the determined force value lies and/or relating to a difference between the determined force value and an optimal force value and/or relating to a match between the determined force value and the optimal force value.

4. The personal care device in accordance with claim 3, wherein the feedback unit is structured and/or arranged for providing a start feedback signal indicating that the determined force value essentially matches the optimal force value, and for providing a current feedback signal deviating from the start feedback signal the stronger, the larger the difference is between the optimal force value and the determined force value, where preferably the change between the start feedback signal and the current feedback signal is gradual in dependence on the difference between the optimal force value and the determined force value.

5. The personal care device in accordance with claim 4, wherein the feedback unit is structured and/or arranged to provide the start feedback signal comprising a start degree of user-noticeable orderliness and to gradually decrease the degree of user-noticeable orderliness of the current feedback signal the more the larger the difference between the optimal force value and the determined force value is.

6. The personal care device in accordance with claim 5, wherein the feedback is visual feedback, and the control unit (40) is structured and/or arranged to provide a visual feedback signal in accordance with one of the following implementations to decrease the orderliness of the feedback:
- the start feedback signal is a graphical symbol or an image, and the current feedback signal is the graphical symbol or image that is dissolved the more, the larger the difference is between the optimal force value and the determined force value; or
- the start feedback signal is a matching overlay of two identical graphical symbols or images, and the matching graphical symbols or images are moved away from each other the more, the larger the difference is between the force value at the optimal force value and the currently applied force value.

7. The personal care device in accordance with claim 5 or claim 6, wherein the feedback is audible feedback, and the control unit (40) is structured and/or arranged to provide an audible feedback signal in accordance with the following implementation:
- wherein the start feedback signal comprises a sound having a first frequency and a second frequency being a harmonic of the first frequency and the current feedback signal is a sound where at least one of the first or second frequencies is gradually varied in dependence on the difference is between the optimal force value and the determined force value.

8. The personal care device in accordance with one of claims 5 to 7, wherein the feedback is haptic feedback, and the control unit (40) is structured and/or arranged to provide a haptic feedback signal in accordance with the following implementation:
- wherein the start feedback signal comprises a vibration having a first frequency and a second frequency being a harmonic of the first frequency and the current feedback signal is a vibration where at least one of the first or second frequencies is gradually varied in dependence on the difference is between the optimal force value and the determined force value.

9. The personal care device in accordance with one of claims 1 to 8, comprising at least one sensor structured and/or arranged to create sensor data indicative of a position or location of the personal care device relative to the treatment surface, preferably wherein the sensor is at least one from a list comprising an accelerometer, a gyroscope, a barometer, a magnetometer and a camera.

10. The personal care device in accordance with one of claims 1 to 9, wherein the control unit (40) is structured and/or arranged to provide compliance feedback about a level of compliance with a predetermined optimum force value or optimum force value range with which the personal care head (10) should be pushed against the treatment surface, which compliance feedback is provided during an ongoing personal care session and/or after a completed personal care session and/or for at least one previous personal care session, optionally wherein the compliance feedback is provided for at least two different positions or locations on the treatment surface.

11. The personal care device in accordance with one of claims 1 to 10, wherein the force sensor (50) is responsive to a deflection of a first portion of the personal care device (1) with respect to a second portion of the personal care device (1) in dependence on the currently applied force with which the personal care head is pushed against the treatment surface, optionally wherein the force sensor (50) comprises a Hall sensor and a permanent magnet that are each disposed at a different one of the first portion and the second portion of the personal care device.

12. The personal care device in accordance with one of claims 1 to 11, comprising at least one sensor structured and/or arranged to create sensor data indicative of a motion of the personal care device, wherein the control unit is structured and/or arranged for switching on the drive unit of the personal care device in case the sensor data indicative of motion of the personal care device (1) indicate a lifting of the personal care device from a rest position.

13. A personal care system comprising a personal care device (1) in accordance with any one of claims 1 to 12 and a separate feedback device structured and/or arranged for additionally or alternatively providing at least one of a visual, audible or haptic feedback relating to the determined force value and/or relating to the force value range in which the determined force value lies and/or relating to a difference between the determined force value and an optimum force value and/or relating to a match between the determined force value with the optimum force value, optionally wherein the personal care device (1) and the separate feedback device are structured and/or arranged for at least on-directional wireless communication from the personal care device (1) to the separate feedback device, preferably wherein the personal care device (1) and the separate feedback device are structured and/or arranged for bidirectional wireless communication.

## Patentansprüche

1. Körperpflegevorrichtung (1), vorzugsweise eine elektrische Zahnbürste, umfassend
ein Körperpflegekopfstück (10), vorzugsweise ein Zahnbürstenkopfstück;
einen Widerstandskraftsensor (50), der zum Erfassen von Widerstandskraftsensordaten, die einen Widerstandskraftwert (F) angeben, mit dem das Körperpflegekopfstück (10) entlang wenigstens einer ersten Widerstandskraftrichtung gegen eine Behandlungsoberfläche gedrückt wird, strukturiert und/oder angeordnet ist;
einen Prozessor (40), der zum Festlegen des Widerstandskraftwerts aus den Widerstandskraftsensordaten strukturiert und/oder angeordnet ist;
eine Antriebseinheit (30), die zum Antreiben des Körperpflegekopfstücks (10) in eine Bewegung, die **dadurch gekennzeichnet ist, dass** wenigstens ein Bewegungsparameter einer aus der Liste ist, umfassend eine Geschwindigkeit, eine Amplitude und eine Frequenz, strukturiert und/oder angeordnet ist, wobei die Bewegung vorzugsweise eine oszillierende Drehbewegung ist; und
eine Steuereinheit (40), die zum derartigen Steuern des Bewegungsparameters des Körperpflegekopfstücks (10) in Abhängigkeit von dem festgelegten Widerstandskraftwert (F), dass in einem ersten Widerstandskraftwertebereich (110; 130, 131), der sich von einem ersten unteren Widerstandskraftwert zu einem ersten oberen Widerstandskraftwert erstreckt, der Bewegungsparameter allmählich von einem ersten Bewegungsparameter-Startwert zu einem ersten Bewegungsparameter-Endwert ansteigt, wenn der Widerstandskraftwert (F) von dem ersten unteren Widerstandskraftwert zu dem ersten oberen Widerstandskraftwert ansteigt, und zum derartigen Steuern des Bewegungsparameters strukturiert und/oder angeordnet ist, dass in einem zweiten Widerstandskraftwertebereich (111; 132), der sich von einem zweiten unteren Widerstandskraftwert zu einem zweiten oberen Widerstandskraftwert erstreckt und sich an den ersten Widerstandskraftwertebereich (110; 130, 131) anschließt und optional an diesen angrenzt, der Bewegungsparameter allmählich von einem zweiten Bewegungsparameter-Startwert, der identisch mit dem ersten Bewegungsparameter-Endwert ist, zu einem zweiten Bewegungsparameter-Endwert verringert wird, wenn der Widerstandskraftwert von einem zweiten unteren Widerstandskraftwert, der identisch mit dem ersten oberen Widerstandskraftwert ist, zu einem zweiten oberen Widerstandskraftwert ansteigt, sodass der erste Bewegungsparameter-Endwert einen Gesamtspitzenwert des Bewegungsparameters darstellt.

2. Körperpflegevorrichtung nach Anspruch 1, wobei die Steuereinheit (40) zum derartigen Steuern des Bewegungsparameters strukturiert und/oder angeordnet ist, dass in einem dritten Widerstandskraftwertebereich (112), der sich von einem dritten unteren Widerstandskraftwert zu einem dritten oberen Widerstandskraftwert erstreckt und sich an den zweiten Widerstandskraftwertebereich (111; 132) anschließt und optional an diesen angrenzt, der Bewegungsparameter allmählich von einem dritten Bewegungsparameter-Startwert, der identisch mit dem zweiten Bewegungsparameter-Endwert ist, zu einem dritten Bewegungsparameter-Endwert verringert wird, wenn der Widerstandskraftwert von einem dritten unteren Widerstandskraftwert, der identisch mit dem zweiten oberen Widerstandskraftwert ist, zu einem dritten oberen Widerstandskraftwert ansteigt, wobei wahlweise die Steuereinheit (40) zum derartigen Steuern des Bewegungsparameters strukturiert und/oder angeordnet ist, dass in einem vierten Widerstandskraftwertebereich (133), der sich von einem vierten unteren Widerstandskraftwert zu einem vierten oberen Widerstandskraftwert erstreckt und sich an den dritten Widerstandskraftwertebereich anschließt und optional an diesen angrenzt, der Bewegungsparameter allmählich von einem vierten Bewegungsparameter-Startwert, der identisch mit dem dritten Bewegungsparameter-Endwert ist, zu einem vierten Bewegungsparameter-Endwert verringert wird, wenn der Widerstandskraftwert von einem vierten unteren Widerstandskraftwert, der identisch mit dem dritten oberen Widerstandskraftwert ist, zu einem vierten oberen Widerstandskraftwert ansteigt.

3. Körperpflegevorrichtung nach Anspruch 1 oder 2, umfassend eine Feedbackeinheit zum Bereitstellen eines optischen, akustischen oder haptischen Feedbacks bezüglich des festgelegten Widerstandskraftwerts und/oder bezüglich des Widerstandskraftwertebereich, in dem der festgelegte Widerstandskraftwert liegt und/oder bezüglich einer Differenz zwischen dem festgelegten Widerstandskraftwert und einem optimalen Widerstandskraftwert und/oder bezüglich einer Übereinstimmung zwischen dem festgelegten Widerstandskraftwert und dem optimalen Widerstandskraftwert.

4. Körperpflegevorrichtung nach Anspruch 3, wobei die Feedback-Einheit zum Bereitstellen eines Start-Feedback-Signals, das angibt, dass der festgelegte Widerstandskraftwert im Wesentlichen dem optimalen Widerstandskraftwert entspricht, und zum Bereitstellen eines aktuellen Feedback-Signals, das umso stärker von dem Start-Feedback-Signal abweicht, je größer die Differenz zwischen dem optimalen Widerstandskraftwert und dem festgelegten Widerstandskraftwert ist, strukturiert und/oder angeordnet ist, wobei vorzugsweise die Änderung zwischen dem Start-Feedback-Signal und dem aktuellen Feedback-Signal in Abhängigkeit von der Differenz zwischen dem optimalen Widerstandskraftwert und dem festgelegten Widerstandskraftwert allmählich erfolgt.

5. Körperpflegevorrichtung nach Anspruch 4, wobei die Feedback-Einheit strukturiert und/oder angeordnet ist, um das Start-Feedback-Signal bereitzustellen, umfassend einen Startgrad einer für einen Benutzer wahrnehmbaren Ordnung, und um den Grad der für den Benutzer wahrnehmbaren Ordnung des aktuellen Feedback-Signals allmählich zu verringern, und zwar umso mehr, je größer die Differenz zwischen dem optimalen Widerstandskraftwert und dem festgelegten Widerstandskraftwert ist.

6. Körperpflegevorrichtung nach Anspruch 5, wobei das Feedback ein visuelles Feedback ist und die Steuereinheit (40) strukturiert und/oder angeordnet ist, um ein visuelles Feedback-Signal gemäß einer der folgenden Implementierungen bereitzustellen, um die Ordnung des Feedbacks zu verringern:
- das Start-Feedback-Signal ist ein grafisches Symbol oder ein Bild und das aktuelle Feedback-Signal ist das grafische Symbol oder das Bild, das umso stärker aufgelöst wird, je größer die Differenz zwischen dem optimalen Widerstandskraftwert und dem festgelegten Widerstandskraftwert ist; oder
- das Start-Feedback-Signal ist eine übereinstimmende Überlagerung zweier identischer grafischer Symbole oder Bilder, und die übereinstimmenden grafischen Symbole oder Bilder werden umso weiter voneinander weggerückt, je größer die Differenz zwischen dem Widerstandskraftwert beim optimalen Widerstandskraftwert und dem aktuell angelegten Widerstandskraftwert ist.

7. Körperpflegevorrichtung nach Anspruch 5 oder 6, wobei das Feedback ein akustisches Feedback ist und die Steuereinheit (40) strukturiert und/oder angeordnet ist, um ein akustisches Feedback-Signal gemäß der folgenden Implementierung bereitzustellen:
- wobei das Start-Feedback-Signal einen Ton, der eine erste Frequenz und eine zweite Frequenz aufweist, die eine Harmonische der ersten Frequenz ist, umfasst, und das aktuelle Feedback-Signal ein Ton ist, bei dem wenigstens eine der ersten oder der zweiten Frequenz in Abhängigkeit von der Differenz zwischen dem optimalen Widerstandskraftwert und dem festgelegten Widerstandskraftwert allmählich variiert wird.

8. Körperpflegevorrichtung nach einem der Ansprüche 5 bis 7, wobei das Feedback ein haptisches Feedback ist und die Steuereinheit (40) strukturiert und/oder angeordnet ist, um ein haptisches Feedback-Signal gemäß der folgenden Implementierung bereitzustellen:
- wobei das Start-Feedback-Signal eine Vibration, die eine erste Frequenz und eine zweite Frequenz aufweist, die eine Harmonische der ersten Frequenz ist, umfasst, und das aktuelle Feedback-Signal eine Vibration ist, bei der wenigstens eine der ersten oder der zweiten Frequenz in Abhängigkeit von der Differenz zwischen dem optimalen Widerstandskraftwert und dem festgelegten Widerstandskraftwert allmählich variiert wird.

9. Körperpflegevorrichtung nach einem der Ansprüche 1 bis 8, umfassend wenigstens einen Sensor, der strukturiert und/oder angeordnet ist, um Sensordaten zu erzeugen, die eine Position oder Stelle der Körperpflegevorrichtung relativ zu der Behandlungsoberfläche angeben, wobei der Sensor vorzugsweise wenigstens einer aus einer Liste ist, umfassend einen Beschleunigungsmesser, ein Gyroskop, ein Barometer, ein Magnetometer und eine Kamera.

10. Körperpflegevorrichtung nach einem der Ansprüche 1 bis 9, wobei die Steuereinheit (40) strukturiert und/oder angeordnet ist, um ein Einhaltungs-Feedback über einen Grad einer Einhaltung eines vorher festgelegten optimalen Widerstandskraftwerts oder optimalen Widerstandskraftwertbereichs bereitzustellen, mit dem das Körperpflegekopfstück (10) gegen die Behandlungsoberfläche gedrückt werden sollte, wobei das Einhaltungs-Feedback während einer laufenden Körperpflegesitzung und/oder nach einer abgeschlossenen Körperpflegesitzung und/oder für wenigstens eine vorherige Körperpflegesitzung bereitgestellt wird, wobei das Einhaltungs-Feedback optional für wenigstens zwei unterschiedliche Positionen oder Stellen auf der Behandlungsoberfläche bereitgestellt wird.

11. Körperpflegevorrichtung nach einem der Ansprüche 1 bis 10, wobei der Kraftsensor (50) auf eine Auslenkung eines ersten Abschnitts der Körperpflegevorrichtung (1) in Bezug auf einen zweiten Abschnitt der Körperpflegevorrichtung (1) in Abhängigkeit von der aktuell angelegten Kraft reagiert, mit der das Körperpflegekopfstück gegen die Behandlungsoberfläche gedrückt wird, wobei der Kraftsensor (50) optional einen Hall-Sensor und einen Permanentmagneten umfasst, die jeweils an einem unterschiedlichen des ersten Abschnitts und des zweiten Abschnitts der Körperpflegevorrichtung eingerichtet sind.

12. Körperpflegevorrichtung nach einem der Ansprüche 1 bis 11, umfassend wenigstens einen Sensor, der strukturiert und/oder angeordnet ist, um Sensordaten zu erzeugen, die eine Bewegung der Körperpflegevorrichtung angeben, wobei die Steuereinheit zum Einschalten der Antriebseinheit der Körperpflegevorrichtung strukturiert und/oder angeordnet ist, falls die Sensordaten, die eine Bewegung der Körperpflegevorrichtung (1) angeben, ein Anheben der Körperpflegevorrichtung aus einer Ruheposition angeben.

13. Körperpflegesystem, umfassend eine Körperpflegevorrichtung (1) nach einem der Ansprüche 1 bis 12 und eine separate Feedback-Vorrichtung, die zum zusätzlichen oder alternativen Bereitstellen wenigstens eines von einem optischen, akustischen oder haptischen Feedback bezüglich dem festgelegten Widerstandskraftwert und/oder bezüglich dem Widerstandskraftwertbereich, in dem der festgelegte Widerstandskraftwert liegt, und/oder bezüglich einer Differenz zwischen dem festgelegten Widerstandskraftwert und einem optimalen Widerstandskraftwert und/oder bezüglich einer Übereinstimmung zwischen dem festgelegten Widerstandskraftwert und dem optimalen Widerstandskraftwert strukturiert und/oder angeordnet ist, wobei wahlweise die Körperpflegevorrichtung (1) und die separate Feedback-Vorrichtung für wenigstens eine gerichtete Drahtloskommunikation von der Körperpflegevorrichtung (1) zu der separaten Feedback-Vorrichtung strukturiert und/oder angeordnet sind, vorzugsweise wobei die Körperpflegevorrichtung (1) und die separate Feedback-Vorrichtung für eine bidirektionale Drahtloskommunikation strukturiert und/oder angeordnet sind.

## Revendications

1. Dispositif de soins personnels (1), de préférence une brosse à dents électrique, comprenant
une tête de soins personnels (10), de préférence une tête de brosse à dents ;
un capteur de force (50) structuré et/ou agencé pour acquérir des données de capteur de force indiquant une valeur de force (F) avec laquelle la tête de soins personnels (10) est poussée contre une surface de traitement le long d'au moins une première direction de force ;
un processeur (40) structuré et/ou agencé pour déterminer la valeur de force à partir des données de capteur de force ;
une unité d'entraînement (30) structurée et/ou agencée pour entraîner la tête de soins personnels (10) dans un mouvement qui est **caractérisé par** au moins un paramètre de mouvement étant un dans la liste comprenant une vitesse, une amplitude et une fréquence, le mouvement étant de préférence un mouvement rotatif oscillatoire ; et
une unité de commande (40) structurée et/ou agencée pour commander le paramètre de mouvement de la tête de soins personnels (10) en fonction de la valeur de force déterminée (F) de telle sorte que dans une première plage de valeurs de force (110 ; 130, 131) s'étendant d'une première valeur de force inférieure jusqu'à une première valeur de force supérieure, le paramètre de mouvement est progressivement augmenté d'une première valeur de début de paramètre de mouvement jusqu'à une première valeur de fin de paramètre de mouvement lorsque la valeur de force (F) augmente de la première valeur de force inférieure jusqu'à la première valeur de force supérieure et pour commander le paramètre de mouvement de telle sorte que dans une deuxième plage de valeurs de force (111 ; 132) s'étendant d'une deuxième valeur de force inférieure jusqu'à une deuxième valeur de force supérieure et étant ultérieure et éventuellement attenante à la première plage de valeurs de force (110 ; 130, 131) le paramètre de mouvement est progressivement réduit d'une deuxième valeur de début de paramètre de mouvement qui est identique à la première valeur de fin de paramètre de mouvement jusqu'à une deuxième valeur de fin de paramètre de mouvement lorsque la valeur de force augmente d'une deuxième valeur de force inférieure étant identique à la première valeur de force supérieure jusqu'à une deuxième valeur de force supérieure, de sorte que la première valeur de fin de paramètre de mouvement représente une valeur de pic globale du paramètre de mouvement.

2. Dispositif de soins personnels selon la revendication 1, dans lequel l'unité de commande (40) est structurée et/ou agencée pour commander le paramètre de mouvement de telle sorte que dans une troisième plage de valeurs de force (112) s'étendant d'une troisième valeur de force inférieure jusqu'à une troisième valeur de force supérieure et étant ultérieure et éventuellement attenante à la deuxième plage de valeurs de force (111 ; 132), le paramètre de mouvement est progressivement réduit d'une troisième valeur de début de paramètre de mouvement qui est identique à la deuxième valeur de fin de paramètre de mouvement jusqu'à une troisième valeur de fin de paramètre de mouvement lorsque la valeur de force augmente d'une troisième valeur de force inférieure étant identique à la deuxième valeur de force supérieure jusqu'à une troisième valeur de force supérieure, éventuellement dans lequel l'unité de commande (40) est structurée et/ou agencée pour commander le paramètre de mouvement de telle sorte que, dans une quatrième plage de valeurs de force (133) s'étendant d'une quatrième valeur de force inférieure jusqu'à une quatrième valeur de force supérieure et étant ultérieure à la troisième plage de valeurs de force, le paramètre de mouvement est progressivement réduit d'une quatrième valeur de début de paramètre de mouvement qui est identique à la troisième valeur de fin de paramètre de mouvement jusqu'à une quatrième valeur de fin de paramètre de mouvement lorsque la valeur de force augmente d'une quatrième valeur de force inférieure étant identique à la troisième valeur de force supérieure jusqu'à une quatrième valeur de force supérieure.

3. Dispositif de soins personnels selon la revendication 1 ou la revendication 2, comprenant une unité de rétroaction pour fournir une rétroaction visuelle, sonore ou haptique relative à la valeur de force déterminée et/ou relative à la plage de valeurs de force dans laquelle se situe la valeur de force déterminée et/ou relative à une différence entre la valeur de force déterminée et une valeur de force optimale et/ou relative à une correspondance entre la valeur de force déterminée et la valeur de force optimale.

4. Dispositif de soins personnels selon la revendication 3, dans lequel l'unité de rétroaction est structurée et/ou agencée pour fournir un signal de rétroaction de début indiquant que la valeur de force déterminée correspond pratiquement à la valeur de force optimale, et pour fournir un signal de rétroaction actuel s'écartant du signal de rétroaction de début d'autant plus fort que la différence est grande entre la valeur de force optimale et la valeur de force déterminée, où de préférence le changement entre le signal de rétroaction de début et le signal de rétroaction actuel est graduel en fonction de la différence entre la valeur de force optimale et la valeur de force déterminée.

5. Dispositif de soins personnels selon la revendication 4, dans lequel l'unité de rétroaction est structurée et/ou agencée pour fournir le signal de rétroaction de début comprenant un degré de début d'ordre perceptible par l'utilisateur et pour progressivement réduire le degré d'ordre perceptible par l'utilisateur du signal de rétroaction actuel plus la différence est grande entre la valeur de force optimale et la valeur de force déterminée.

6. Dispositif de soins personnels selon la revendication 5, dans lequel la rétroaction est une rétroaction visuelle, et l'unité de commande (40) est structurée et/ou agencée pour fournir un signal de rétroaction visuelle conformément à l'une des mises en œuvre suivantes afin de réduire l'ordre de la rétroaction :
- le signal de rétroaction de début est un symbole graphique ou une image, et le signal de rétroaction actuel est le symbole graphique ou l'image qui est le plus dissous, plus la différence est grande entre la valeur de force optimale et la valeur de force déterminée ; ou
- le signal de rétroaction de début est une superposition correspondante de deux symboles graphiques ou images identiques, et les symboles graphiques ou images correspondants sont d'autant plus éloignés l'un de l'autre, plus la différence est grande entre la valeur de force optimale et la valeur de force actuellement appliquée.

7. Dispositif de soins personnels selon la revendication 5 ou la revendication 6, dans lequel la rétroaction est une rétroaction audible, et l'unité de commande (40) est structurée et/ou agencée pour fournir un signal de rétroaction audible conformément à la mise en œuvre suivante :
- dans lequel le signal de rétroaction de début comprend un son ayant une première fréquence et une seconde fréquence étant une harmonique de la première fréquence, et le signal de rétroaction actuel est un son ou au moins l'une des premières ou des secondes fréquences varie progressivement en fonction de la différence entre la valeur de force optimale et la valeur de force déterminée.

8. Dispositif de soins personnels selon l'une des revendications 5 à 7, dans lequel la rétroaction est une rétroaction haptique, et l'unité de commande (40) est structurée et/ou agencée pour fournir un signal de rétroaction haptique conformément à la mise en œuvre suivante :
- dans lequel le signal de rétroaction de début comprend une vibration ayant une première fréquence et une seconde fréquence étant une harmonique de la première fréquence, et le signal de rétroaction actuel est une vibration ou au moins l'une des premières ou des secondes fréquences varie progressivement en fonction de la différence entre la valeur de force optimale et la valeur de force déterminée.

9. Dispositif de soins personnels selon l'une des revendications 1 à 8, comprenant au moins un capteur structuré et/ou agencé pour créer des données de capteur indiquant une position ou un emplacement du dispositif de soins personnels par rapport à la surface de traitement, de préférence dans lequel le capteur est au moins l'un d'une liste comprenant un accéléromètre, un gyroscope, un baromètre, un magnétomètre et une caméra.

10. Dispositif de soins personnels selon l'une des revendications 1 à 9, dans lequel l'unité de commande (40) est structurée et/ou agencée pour fournir une rétroaction de conformité sur un niveau de conformité avec une valeur de force optimale prédéterminée ou une plage de valeurs de force optimale avec laquelle la tête de soins personnels (10) doit être poussée contre la surface de traitement, laquelle rétroaction de conformité est fournie pendant une séance de soins personnels en cours et/ou après une séance de soins personnels terminée et/ou pour au moins une séance de soins personnels précédente, éventuellement dans lequel la rétroaction de conformité est fournie pour au moins deux positions ou emplacements différents sur la surface de traitement.

11. Dispositif de soins personnels selon l'une des revendications 1 à 10, dans lequel le capteur de force (50) est sensible à une déviation d'une première partie du dispositif de soins personnels (1) par rapport à une seconde partie du dispositif de soins personnels (1) en fonction de la force actuellement appliquée avec laquelle la tête de soins personnels est poussée contre la surface de traitement, éventuellement dans lequel le capteur de force (50) comprend un capteur à effet Hall et un aimant permanent qui sont chacun disposés sur une partie différente de la première partie et de la seconde partie du dispositif de soins personnels.

12. Dispositif de soins personnels selon l'une des revendications 1 à 11, comprenant au moins un capteur structuré et/ou agencé pour créer des données de capteur indiquant un mouvement du dispositif de soins personnels, dans lequel l'unité de commande est structurée et/ou agencée pour mettre en marche l'unité d'entraînement du dispositif de soins personnels au cas où les données de capteur indiquant un mouvement du dispositif de soins personnels (1) indiquent un soulèvement du dispositif de soins personnels à partir d'une position de repos.

13. Système de soins personnels comprenant un dispositif de soins personnels (1) selon l'une quelconque des revendications 1 à 12 et un dispositif de rétroaction séparé structuré et/ou agencé pour fournir, en complément ou alternativement, au moins l'une parmi une rétroaction visuelle, sonore ou haptique relative à la valeur de force déterminée et/ou relative à la plage de valeurs de force dans laquelle se situe la valeur de force déterminée et/ou relative à la différence entre la valeur de force déterminée et une valeur de force optimale et/ou relative à une correspondance entre la valeur de force déterminée et la valeur de force optimale, éventuellement, dans lequel le dispositif de soins personnels (1) et le dispositif de rétroaction séparé sont structurés et/ou agencés pour au moins une communication sans fil unidirectionnelle du dispositif de soins personnels (1) au dispositif de rétroaction séparé, de préférence dans lequel le dispositif de soins personnels (1) et le dispositif de rétroaction séparé sont structurés et/ou agencés pour une communication sans fil bidirectionnelle.
